Europäisches Patentamt

European Patent Office

Office européen des brevets

(11) Publication number: **0 159 017**
**B1**

(12) **EUROPEAN PATENT SPECIFICATION**

(45) Date of publication of patent specification: **13.06.90**

(21) Application number: **85104596.3**

(22) Date of filing: **17.04.85**

(51) Int. Cl.⁵: **B 60 J 5/10**

(54) Back door structures for motor vehicles.

(30) Priority: **18.04.84 JP 77997/84**
**18.04.84 JP 77998/84**
**18.04.84 JP 77999/84**

(43) Date of publication of application:
**23.10.85 Bulletin 85/43**

(45) Publication of the grant of the patent:
**13.06.90 Bulletin 90/24**

(84) Designated Contracting States:
**DE FR GB**

(56) References cited:
**JP-U-57 143 368**
**JP-Y-57 005 212**
**US-A-4 413 854**

(73) Proprietor: **Mazda Motor Corporation**
**No. 3-1, Shinchi Fuchu-cho**
**Aki-gun Hiroshima-ken (JP)**

(72) Inventor: **Hirose, Kazutaka**
**10-12, Ushita Asahi 1-chome Higashi-ku**
**Hiroshima-shi Hiroshima-ken (JP)**
Inventor: **Watanabe, Hiroyuki**
**16-12, Danbara Hinode-cho Minami-ku**
**Hiroshima-shi Hiroshima-ken (JP)**

(74) Representative: **Patentanwälte Müller-Boré,**
**Deufel, Schön, Hertel, Lewald, Otto**
**Postfach 26 02 47 Isartorplatz 6**
**D-8000 München 26 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

## Description

### Background of the Invention
*Field of the Invention*

The present invention relates to back door structures for motor vehicles. More specifically, the present invention pertains to back door structures for vehicle bodies having rear window portions and rear trunk portions.

*Description of Prior Art*

There are many types of motor vehicles which have rear body portions formed with rear door openings or trunk openings adapted to be closed by back doors or trunk lids. A typical example of such back door or trunk lid is disclosed by the Japanese Utility Model publication JP—U—57-143368. In this known structure a trunk lid is provided rearwardly of a fixed rear window so that packages can be thrown into and taken out of the trunk room while the trunk lid is opened. Such conventional trunk structures are however inconvenient for use because the door openings are not sufficiently large for accommodations of large packages. In so-called hatch-back type vehicles, wide back door openings are provided. However, this type of vehicles is also inconvenient in that back doors of a relatively large size have to be opened even when packages are small.

Japanese Utility Model Publication JP—A—57-5212 discloses a hatch-back type vehicle having an auxiliary door of a small size attached to the back door. According to this known proposal an auxiliary door opening is formed in the rear end portion of the back door and the auxiliary door is hinged to the back door to close the auxiliary door opening. It should however be noted that the auxiliary door opening in the proposed door structure is too small even for a small package so that it cannot improve the utility of the back door structure. Further, the proposed structure is inconvenient in that the back door and the auxiliary door have to be handled separately so that when the back door is opened with the auxiliary door open, each of both doors must be closed separately.

The invention starts from a vehicle back door structure which is known from US—A—4,413,854, the structure comprising a back door opening formed in a rear portion of a vehicle body to extend at least partly downwards over a rear end portion of a passenger compartment and over a rear trunk (package compartment) and comprising a liftable door assembly comprised of two door sections, the first upper section being swingably mounted by hinge means to an upper edge of the body in the door opening and including a rear window and the second lower section at its upper edge being swingably mounted by hinge means to the lower edge of the upper section and its lower edge comprising a locking means to releasably lock the lower section to the body, an unlocking means being pivotably mounted to the lower section to release the locking means, thus allowing the upper portion to be raised towards its open position with the lower portion locked relative to the upper portion for providing simultanous access to both the passenger's compartment and the trunk.

In the structure known from US—A—4,413,854 the upper door section is fixedly connected with a main frame whereas the lower door section is swingably mounted at its upper edge to parts of the main frame which function as the lower edge of the upper section. The lower section is releasably locked to the vehicle body via the lower edge of the main frame. The locking and unlocking means is designed such that, selectively, the lower door section alone or the whole frame with both door sections, respectively, may be swung open. One disadvantage of the known structure is to be seen in the fact that it needs an additional main frame which makes the construction of the back door structure heavy and costly. Further, disadvantageously, there are only two selections possible, i.e. an opening of both door sections is possible only when they are fixedly connected with one another by their main frame.

### Object of the Invention

It is therefore an object of the present invention to provide a vehicle backdoor structure of the kind mentioned in the pre-characterizing clause of claim 1 which in combination with a simpler, cheaper construction of less weight is more convenient in use and the pair of door sections of which selectively can be opened separately but closed simultaneously.

### Summary of the Invention

According to the present invention, the above and other objects can be accomplished by a vehicle back door structure comprising a back door opening formed in a rear portion of a vehicle body to extend at least partly downwards over a rear end portion of a passenger compartment and over a rear trunk (package compartment) and comprising a liftable door assembly comprised of two door sections, the first upper section being swingably mounted by hinge means to an upper edge of the body in the door opening and including a rear window and the second lower section at its upper edge being swingably mounted by hinge means to the lower edge of the upper section and its lower edge comprising a locking means to releasably lock the lower section to the body, an unlocking means being pivotably mounted to the lower section to release the locking means thus allowing the upper portion to be raised towards its open position for providing simultaneous access to both the passenger's compartment and the trunk (as known from US—A—4,413,854) characterized in that a second locking means is provided between the two sections to releasably interlock them and that a second unlocking means is pivotably mounted to the lower section and connected with both the first and the second locking means via a coupling member to release them simultaneously, thus enabling the lower section to be opened independently of the upper section and providing access solely to the rear trunk.

According to a more specific embodiment of the invention, a vehicle back door structure has a third locking means provided between the upper section and the body to releasably interlock them whereby a second coupling member is interposed between both the first and the third locking means to release them simultaneously.

Advantageously in a vehicle back door structure according to the invention, dampers are futher provided at the rear end of the body to connect the body with the lower section for supporting the lower section for movement between an open and a closed position of the lower section relative to the upper section while the upper section is in the closed position and holding the lower section in a position aligned with the upper section while the upper section is in the open position.

Further improved embodiments are defined in subclaims 4 to 6 which are disclosed in the description of the drawings more in detail (page 6, line 9 to page 8, line 3).

The above and other features of the present invention will become apparent from the following descriptions of preferred embodiments taking reference to the accompanying drawings.

### Brief Description of the Drawings

Figure 1 is a fragmentary sectional view of a vehicle rear body showing the back door structure in accordance with one embodiment of the present invention,

Figure 2 is a perspective view of the back door structure;

Figure 3 is a sectional view showing the locking mechanism employed in the back door structure;

Figure 4 is a perspective view similar to Figure 2 but showing another embodiment; and

Figure 5 is a sectional view showing the locking mechanism employed in the embodiment shown in Figure 4.

### Descriptions of the Preferred Embodiments

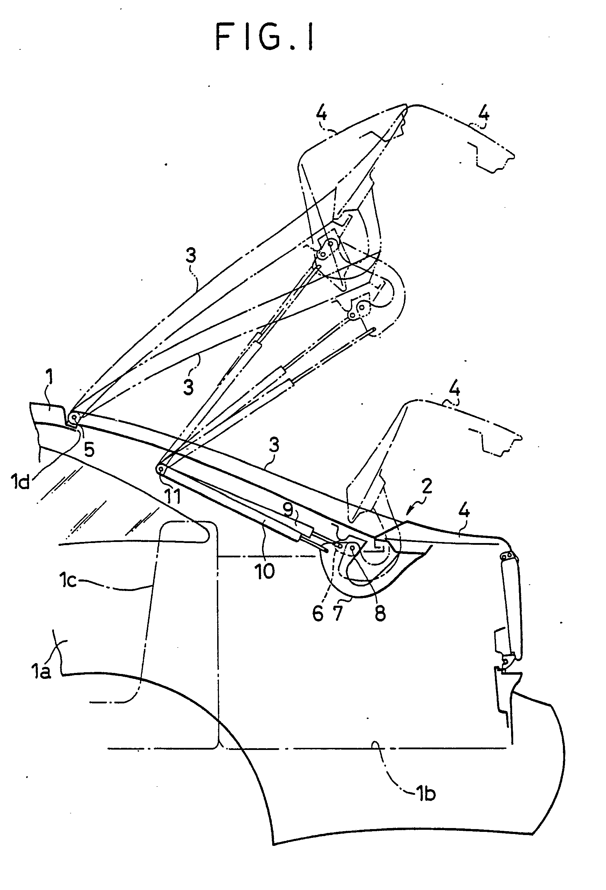

Referring to the drawings, particularly to Figure 1, there is shown a vehicle body 1 formed with a passenger's compartment 1a and a package compartment 1b rearward of the passenger compartment 1a. The passenger compartment 1a has a rear end which is inclined rearward toward downward. The package compartment 1b has a substantially horizontal top at the rear portion. At the rear end portion of the passenger compartment 1a, there is provided a rear seat 1c as well known in the art. The vehicle body 1 is further formed at the rear end portion with a back door opening ld which extends from the rear end of the passenger compartment 1a to the upper and rear portions of the package compartment 1b. In the back door opening 1d, there is provided a back door assembly 2.

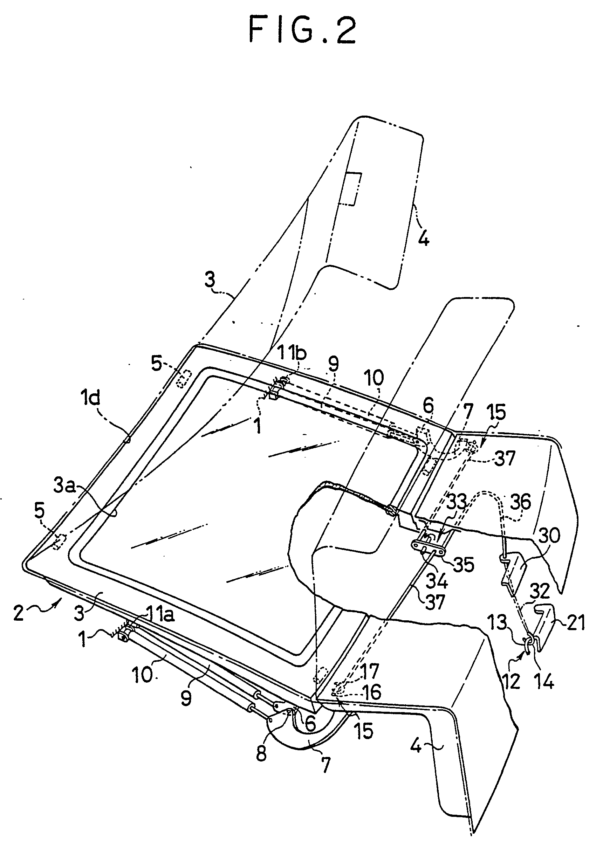

The back door assembly 2 includes as an upper section 3 a rear window section 3 and as a lower section 4 a trunk lid section 4. The rear window section 3 has a transparent window glass 3a and is mounted at the upper edge to the upper edge of the back door opening 1d by means of hinge mechanisms 5 so that the rear window section 3 can be swung upward as shown by phantom lines in Figures 1 and 2. The rear window section 3 is located so that it covers the upper portion of the back door opening 1d which corresponds to the rear end portion of the passenger compartment 1a when the rear window section 3 is in the closed position shown by the solid lines. The rear window section 3 is provided at the inner side of the lower portion with a pair of brackets 6, one at each side of the rear window section 3. There is a damper 9 provided at each side of the rear window section 3 and has one end pivotably connected with the body 1 and the other end pivotably connected with the bracket 6. The damper 9 is of a known structure which is longitudinally extensible and provides a frictional resistance so that it can hold the rear window section 3 at any position including a fully opened position and any partially opened position.

The trunk lid section 4 has a front edge portion provided at each side with a bracket 7 of a substantially J-shaped configuration. The bracket 7 is pivotably connected at one end by a pin 8 with the bracket 6, the other end being secured to the inner side of the trunk lid section 4. A damper 10 is provided and has one end pivotably connected with the vehicle body 1 and the other end connected with an intermediate portion of the bracket 7. The trunk lid section 4 is therefore swingable with respect to the rear window section 3 about the pivot pin 8 between the position shown by solid lines and the position shown by phantom lines. In the position shown by the solid lines, the trunk lid section 4 covers the lower portion of the back door opening ld corresponding to the upper and rear end portions of the package compartment 1b. The damper 10 has the same structure as the damper 9 so that it can hold the trunk lid section 4 at any position.

The damper 10 has an effective stroke smaller than that of the damper 9 so that, when the rear window section 3 is moved to an open position while the trunk lid section 4 is in the open position shown by phantom lines in Figure 1, the damper 10 bottoms earlier than the damper 9 does. Therefore, the bracket 7 and the trunk lid section 4 connected thereto are forced to swing clockwise about the pivot pin 8 when the rear window section 3 is moved further to the open position after the damper 10 has bottomed to take the closed position with respect to the rear window section 3. It is therefore possible to bring both sections 3 and 4 simultaneously to the closed positions.

The back door structure described above can be used in a conventional manner by swinging the trunk lid section 4 between the open and closed positions. Then, the structure functions as a conventional trunk lid in a conventional passenger car. When it is desired to wide open the package compartment, the trunk lid section 4 is moved together with the rear window section 3 to the open position so that the package compartment 1b can be fully opened.

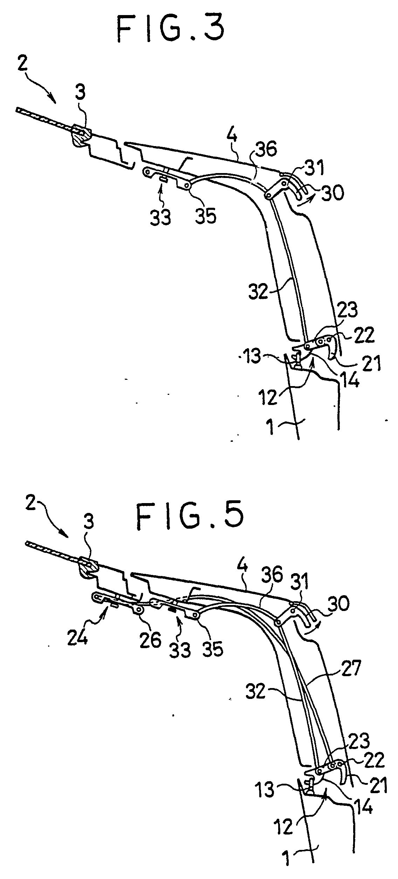

Referring to Figures 2 and 3, it will be noted that the trunk lid section 4 is provided at a lower end portion with a mechanism 12 as a first locking means 12 for locking the trunk lid section 4 to the vehicle body 1. The first locking mechanism 12 includes a ring 13 secured to the vehicle body 1 and a hook 14 pivotably mounted on the lower end portion of the trunk lid section 4 for releasable engagement with the ring 13. There is also provided a mechanism 15 as a second locking means 15 between the sections 3 and 4 as to lock the trunk lid section 4 against movement with respect to the rear window section 3. The second locking mechanism 15 includes a ring 16 secured to the rear window section 3 and a hook 17 pivotably mounted on the front edge portion of the trunk lid section 4 for releasable engagement with the ring 16.

The hooks 14 and 17 are spring biased toward engaging positions with the rings 13 and 16, respectively. It will therefore be understod that the locking mechanisms 12 and 15 serve to lock the sections 3 and 4 in closed positions. The trunk lid section 4 is provided at the outer side of the rear portion with a member 21 as a first unlocking means 21 which is mounted pivotally on the trunk lid section 4 by means of a pin 22. The unlocking member 21 has a crankarm which is connected through a link 23 with the hook 14 so that an actuation of the unlocking member 21 causes a pivotal movement of the hook 14 against the biasing force of the spring toward a release position.

There is also provided on the trunk lid section 4 a member 30 as a second unlocking means 30 which is pivotally mounted on the trunk lid section 4 by a pin 31. The unlocking member 30 has a crankarm connected through a rod 32 with the hook 13 of the first locking mechanism 12 so that an actuation of the unlocking member 30 causes a movement of the hook 13 toward the release position. The second unlocking member 30 is also connected through an unlocking mechanism 33 with the second locking mechanism 15. The mechanism 33 includes a link 35 pivotally mounted on the trunk lid section 4 through a pin 34. The link 35 is connected at one end through a cable 36 with the crankarm of the second unlocking member 30 so that an actuation thereof causes a pivotal movement of the link 35 in the direction shown by an arrow in Figure 2. The link 35 is also connected with unlocking rods 37 which are connected with the hooks 17 of the locking mechanisms 15 at the respective sides of the trunk lid section 4. The actuating rods 37 function to transmit the movement of the link 35 to the hooks 17 so as to move the hooks 17 to the release positions. It will therefore be understood that an actuation of the second unlocking member 30 unlocks the first and second locking mechanisms 12 and 15 simultaneously so that the trunk lid section 4 can be opened independently from the rear window section 3.

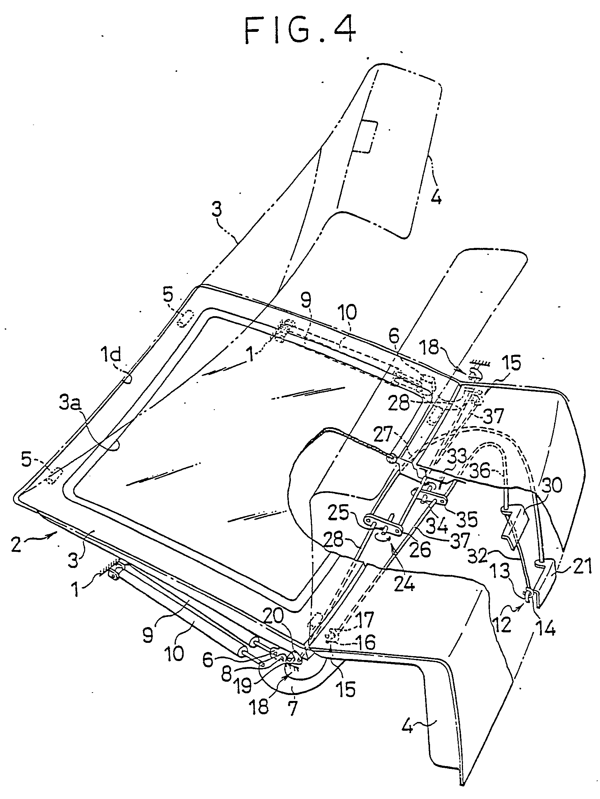

Referring now to Figures 4 and 5, the embodiment shown therein further includes a mechanism 18 as a third locking means 18 provided at each side of the rear window section 3 in addition to the first and second locking mechanisms 12 and 15 which are identical to those employed in the previous embodiment. The third locking mechanism 18 includes a ring 19 secured to the vehicle body 1 and a hook 20 pivotably mounted on the rear window section 3 for releasable engagement with the ring 19. The hook 20 is spring biased into the engaging position. There is provided a second unlocking mechanism 24 which includes a link 26 pivotably mounted on the trunk lid section 4 by means of a pin 25. The link 26 is connected at one end through a cable 27 with the crankarm of the first unlocking member 21 so that the link 26 is swung in the direction shown by an arrow in Figure 4 when the first unlocking member 21 is actuated. The link 26 is also connected with unlocking rods 28 which are in turn connected with the hooks 20 of the third locking mechanism 18 at the respective sides of the rear window section 3. The movement in the direction of the arrow of the link 26 is thus transmitted through the unlocking rods 28 to the hooks 20 to thereby move the hooks 20 to the release positions. It will therefore be understood that an actuation of the first unlocking member 21 causes unlocking movements of the first and third locking mechanisms 12 and 18 maintaining the second locking mechanism 15 in the locking position. It is therefore possible to open to the rear window section 3 together with the trunk lid section 4. When the second unlocking member 30 is actuated, however, the first and second locking mechanisms 12 and 15 are unlocked, whereas the third locking mechanism 18 is mantained in the locking position. Thus, the trunk lid section 4 can be opened independently from the rear window section 3.

## Claims

1. A vehicle back door structure comprising a back door opening (1d) formed in a rear portion of a vehicle body (1) to extend at least partly downwards over a rear end portion of a passenger compartment (1a) and over a rear trunk (package compartment) (1b) and comprising a liftable door assembly (2) comprised of two door sections (3, 4), the first upper section (3) being swingably mounted by hinge means (5) to an upper edge of the body (1) in the door opening (1d) and including a rear window (3a) and the second lower or trunk lid section (4) at its upper edge being swingably mounted by hinge means (6, 7, 8) to the lower edge of the upper section (3) and its lower edge comprising a locking means (12, 13, 14) to releasably lock the lower section (4) to the body (1), an unlocking means (21, 22, 23) being pivotably mounted to the lower section (4) to release the locking mens (12, 13, 14) thus allowing the upper portion (3) to be raised towards its open position with the lower portion (4) locked relative to the upper portion (3) for providing simultaneous access to both the passenger's compartment (1a) and the trunk (1b), characterized in that a second locking means (15, 16, 17) is provided between the two sections (3, 4) to releasably interlock them and that a second unlocking means (30, 31, 32) is pivotably mounted to the lower section (4) and connected with both the first (12, 13, 14) and the second (15, 16, 17) locking means via a coupling member (33) to release them simultaneously, thus enabling the lower section (4) to be opened independently of the upper section (3) and providing access solely to the rear trunk (1b).

2. A vehicle back door structure according to claim 1 in which a third locking means (18, 19, 20) is provided between the upper section (3) and the body (1) to releasably interlock them and in which a second coupling member (24) is interposed between both the first (12, 13, 14) and the third (18, 19, 20) locking means to release them simultaneously.

3. A vehicle back door structure according to claim 1 or 2 wherein dampers (9, 10) are further provided at the rear end of the body (1) to connect the body (1) with the lower section (4) for supporting the lower section (4) for movement between an open and a closed position of the lower section (4) relative to the upper section (3) while the upper section (3) is in the closed position and holding the lower section (4) in a position aligned with the upper section (3) while the upper section (3) is in the open position.

4. A vehicle back door structure according to claim 3 in which at each side of the upper section (3) there is provided a damper (9) which at one end is pivotably connected with the body (1) and at the other end is pivotably connected with a bracket (6) of the hinge means (6, 7, 8), the dampers (9) being designed to hold the upper section (3) at any position including a fully opened position and any partially opened position.

5. A vehicle back door structure according to claim 4 in which at each side of the front end portion of the lower section (4) there is provided a second bracket (7) of the hinge means (6, 7, 8), the second brackets (7) having a substantially J-shaped configuration whereas one end thereof is pivotably connected by a pin (8) with the corresponding first bracket (6) and at the other end thereof is secured to the inner side of the lower section (4) and in which at each side a second damper (10) is provided one end of which is pivotably connected with the vehicle body (1) and the other end of which is connected with an intermediate portion of the corresponding second bracket (7) allowing the lower section (4) to be swingable with respect to the upper section (3) about the pivot pin (8) between one end position in which the lower section (4) is aligned with the upper section (3) and in the closed position of the upper section (3) covers the lower portion of the back door opening (1d), and a second end position in which the lower section (4) is positioned at right angles to the upper section (3), the dampers (10) being suitable to hold the lower section (4) at any position in between the end positions.

6. A vehicle back door structure according to claim 5 in which the second dampers (10) have an effective stroke smaller than that of the first dampers (9) so that, when the upper section (3) is moved to an open position while the lower section (4) is in the open position, the second dampers (10) bottom earlier than the first dampers (9) do and, accordingly, the second brackets (7) and the lower section (4) connected thereto are forced to swing about the pivot pin (8) during further movement of the upper section (3) after the second dampers (10) have bottommed to take the position in alignment with the upper section (3), thus allowing to simultaneously bring both the upper and lower section (3) and (4) to their closed positions.

**Patentansprüche**

1. Fahrzeughecktüranordnung mit einer Hecktüröffnung (1d), die in einem hinteren Teil einer Fahrzeugkarosserie (1) ausgebildet ist und sich zumindest teilweise abwärts über einen hinteren Endteil eines Fahrgastabteils (1a) und über einen hinteren Kofferraum (Gepäckabteil) (1b) erstreckt und eine anhebbare Türanordnung (2) mit zwei Türabschnitten (3, 4) umfaßt, von denen der erste obere Abschnitt (3) über Scharniereinrichtungen (5) an einer oberen Kante der Karosserie (1) in der Türöffnung (1d) schwenkbar angebracht ist und ein Rückfenster (3a) umfaßt und der zweite untere oder den Kofferraumdeckel bildende Abschnitt (4) an seiner oberen Kante über Scharniereinrichtungen (6, 7, 8) an der unteren Kante des oberen Abschnittes (3) schwenkbar angebracht ist und an seiner unteren Kante eine Verriegelungseinrichtung (12, 13, 14), um den unteren Abschnitt (4) an der Karosserie (1) lösbar zu verriegeln, und eine Entriegelungseinrichtung (21, 22, 23) umfäßt, die an dem unteren Abschnitt (4) schwenkbar angebracht ist, um die Verriegelungseinrichtung (12, 13, 14) zu lösen und es somit für den oberen Abschnitt (3) möglich zu machen, diesen in dessen offene Stellung mit dem unteren Abschnitt (4) relativ zu dem oberen Abschnitt (3) verreigelt anzuheben, um einen gleichzeitigen Zugang sowohl zu dem Fahrgastabteil (1a) als auch zu dem Kofferraum (1b) vorzusehen, dadurch gekennzeichnet, daß eine zweite Verriegelungseinrichtung (15, 16, 17) zwischen den zwei Abschnitten (3, 4) vorgesehen ist, un diese lösbar miteinander zu verriegeln, und daß eine zweite Entriegelungseinrichtung (30, 31, 32) an dem unteren Abschnitt (4) schwenkbar angebracht und mit der ersten (12, 13, 14) und der zweiten (15, 16, 17) Verriegelungseinrichtung über ein Kupplungsglied (33) verbuden ist, um diese gleichzeitig zu lösen, so daß der untere Abschnitt (4) unabhängig von dem oberen Abschnitt (3) geöffnet werden kann und dadurch Zugang nur zu dem Kofferraum (1b) vorgesehen wird.

2. Fahrzeughecktüranordnung nach Anspruch 1, in welcher eine dritte Verriegelungseinrichtung (18, 19, 20) zwischen dem oberen Abschnitt (3) und der Karosserie (1) vorgesehen ist, um diese lösbar miteinander zu verriegeln, und in welcher ein zweites Kupplungsglied (24) zwischen die erste (12, 13, 14) und die dritte (18, 19, 20) Verriegelungseinrichtung ist, um diese gleichzeitig.

3. Fahrzeughecktüranordnung nach Anspruch 1 oder 2, in welcher Dämpfglieder (9, 10) weiterhin an dem hinteren Ende der Karosserie (1) vorgesehen sind, um die Karosserie (1) mit dem unteren Abschnitt (4) zu verbinden zum Abstützen des unteren Abschnittes (4) für eine Bewegung des unteren Abschnittes (4) zwischen einer offenen und einer geschlossenen Stellung relativ zu dem oberen Abschnitt (3), während sich der obere Abschnitt (3) in der geschlossenen Stellung befindet, und den unteren Abschnitt (4) in einer Position zu halten, die mit dem oberen Abschnitt (3) fluchtet, während sich der obere Abschnitt (3) in der offenen Stellung befindet.

4. Fahrzeughecktüranordnung nach Anspruch 3, in welcher auf jeder Seite des oberen Abschnittes (3) eine Dämpfeinrichtung (9) vorgesehen ist, die an einem Ende mit der Karosserie (1) und an dem anderen Ende mit einer Halterung (9) der Scharniereinrichtung (6, 7, 8) schwenkbar verbunden ist, wobei die Dämpfeinrichtungen (9) ausgelegt sind, den oberen Abschnitt (3) in jeder Stellung einschließlich einer voll geöffneten Stellung und einer teilweise geöffneten Stellung zu halten.

5. Fahrzeughecktüranordnung nach Anspruch 4, in welcher auf jeder Seite des vorderen Endteils des unteren Abschnittes (4) eine zweite Halterung (7) der Scharniereinrichtung (6, 7, 8) vorgesehen ist, wobei die zweiten Halterungen (7) eine im wesentlichen J-förmige Konfiguration aufweisen, während ein Ende von diesen durch einen Stift (8) mit der zugeordneten ersten Halterung (6) schwenkbar verbunden ist und das andere Ende von diesen an der Innenseite des unteren Abschnittes (4) befestigt ist, und in welcher auf jeder Seite eine zweite Dämpfeinrichtung (10) vorgesehen ist, von der ein Ende mit der Fahrzeugkarosserie (1) schwenkbar verbunden ist und das andere Ende mit einem Zwischenteil der zugeordneten zweiten Halterung (7) verbunden ist, so daß der untere Abschnitt (4) in Bezug auf den oberen Abschnitt (3) um den Schwenkzapfen (8) zwischen einer Endstellung, in welcher der untere Abschnitt (4) mit dem oberen Abschnitt (3) ausgerichtet ist und in der geschlossenen Stellung des oberen Abschnittes (3) den unteren Teil der Hecktüröffnung (1d) abdeckt, und einer zweiten Endstellung, in welcher der untere Abschnitt (4) rechtwinklig zum oberen Abschnitt (3) angeordnet ist, wobei die Dämpfeinrichtungen (10) geeignet sind, den unteren Abschnitt (4) in jeder Stellung zwischen den Endstellungen zu halten.

6. Fahrzeughecktüranordnung nach Anspruch 5, in welcher die zweiten Dämpfeinrichtungen (10) einen effektiven Hub aufweisen, der kleiner als der der ersten Dämpfeinrichtungen (9) ist, so daß, wenn der obere Abschnitt (3) in eine offene Stellung bewegt wird, während sich der untere Abschnitt (4) in der offenen Stellung befindet, die zweiten Dämpfeinrichtungen (10) früher auf ihrem. Bodenanschlag ankommen als die ersten Dämpfeinrichtungen (9) und infolgedessen die zweiten Halterungen (7) und der mit diesen verbundenen untere Abschnitt (4) gezwungen sind, um den Schwenkzapfen (8) der weiteren Bewegung des oberen Abschnittes (3) zu schwenken, nachdem die zweiten Dämpfeinrichtungen (10) an ihrem Bodenanschlag angekommen sind, um die Stellung in Ausrichtung mit dem oberen Abschnitt (3) einzunehmen, so daß es möglich ist, gleichzeitig den oberen und unteren Abschnitt (3) bzw. (4) beide in ihre geschlossenen Stellungen zu bringen.

**Revendications**

1. Structure de porte arrière de véhicule, comprenant une ouverture (1d) de porte arrière formée dans une partie arrière d'une carrosserie (1) de véhicule afin qu'elle soit disposée au moins partiellement vers le bas au-dessus d'une partie d'extrémité arrière d'un compartiment (1a) pour passagers et au-dessus d'un coffre arrière (compartiment à bagages) (1b) et comprenant un ensemble (2) à porte levante comprenant deux tronçons de porte (3, 4), le premier tronçon supérieur (3) étant monté sous forme articulée, autour de dispositifs d'articulation (5), sur un bord supérieur de la carrosserie (1) dans l'ouverture (1d) de la porte et comprenant une lunette arrière (3a), le second tronçon inférieur ou tronçon de couvercle de coffre (4) étant monté sous forme articulée, à son bord supérieur et par un dispositif d'articulation (6, 7, 8), au bord inférieur du tronçon supérieur (3) et son bord inférieur comprenant un dispositif de verrouillage (12, 13, 14) destiné à verrouiller temporairement le tronçon inférieur (4) sur la carrosserie (1), un dispositif de déverrouillage (21, 22, 23) étant monté sous forme articulée sur le tronçon inférieur (4) afin qu'il libère le dispositif de verrouillage (12, 13, 14) et permette ainsi le soulèvement de la partie supérieure (3) vers sa position d'ouverture alors que la partie inférieure (4) est verrouillée par rapport à la partie supérieure (3), si bien que l'accès peut être obtenu simultanément à la fois au compartiment des passagers (1a) et au coffre (1b), caractérisée en ce qu'un second dispositif de verrouillage (15, 16, 17) est placé entre les deux tronçons (3, 4) afin qu'il raccorde temporairement ceux-ci, et en ce qu'un second dispositif de déverrouillage (30, 31, 32) est monté sous forme articulée sur le tronçon inférieur (4) et est raccordé à la fois au premier (12, 13, 14) et au second (15, 16, 17) dispositif de verrouillage par un organe d'accouplement (33) destiné à le libérer simultanément et à permettre ainsi au tronçon inférieur (4) d'être ouvert indépendamment du tronçon supérieur (3) et de donner accès uniquement au coffre arrière (1b).

**2.** Structure de porte arrière de véhicule selon la revendication 1, dans laquelle un troisième dispositif de verrouillage (18, 19, 20) est placé entre le tronçon supérieur (3) et la carrosserie (1) afin qu'il assure leur coopération temporaire, et dans laquelle un second organe d'accouplement (24) est placé entre le premier (12, 13, 14) et le troisième (18, 19, 20) dispositif de verrouillage afin qu'ils soient libérés simultanément.

**3.** Structure de porte arrière de véhicule selon la revendication 1 ou 2, dans laquelle des amortisseurs (9, 10) sont disposés à l'extrémité arrière de la carrosserie (1) afin qu'ils raccordent la carrosserie (1) au tronçon inférieur (4) et supportent le tronçon inférieur (4) afin qu'il se déplace entre une position d'ouverture et une position de fermeture du tronçon inférieur (4) par rapport au tronçon supérieur (3) alors que le tronçon supérieur (3) et en position de fermeture, et maintenant le tronçon inférieur (4) en position alignée sur le tronçon supérieur (3) lorsque le tronçon supérieur (3) et dans la position d'ouverture.

**4.** Structure de porte arrière de véhicule selon la revendication 3, dans laquelle, de chaque côté du tronçon supérieur (3), un amortisseur (9) est disposé avec une première extrémité reccordée sous formé articulée sur la carrosserie (1) et une autre extrémité raccordée sous forme articulée sur une même équerre (6) du dispositif d'articulation (6, 7, 8), les amortisseurs (9) étant réalisés afin qu'ils maintiennent le tronçon supérieur (3) en position quelconque, notamment en position totalement ouverte et en position partiellement ouverte.

**5.** Structure de porte arrière de véhicule selon la revendication 4, dans laquelle, de chaque côté de la partie d'extrémité avant du tronçon inférieur (4), une second équerre (7) du dispositif d'articulation (6, 7, 8) est disposée, les secondes équerres (7) ayant une forme pratiquement en J, une première extrémité de seconde équerre étanbt raccordée sous forme articulée, autour d'un axe (8), sur une première équerre correspondante (6) et l'autre extrémité étant fixée à la face interne due tronçon inférieur (4), et dans laquelle, de chaque côté, un second amortisseur (10) est disposé avec une première extrémité raccordée sous forme articulée à la carrosserie (1) du véhicule et une autre extrémité raccordée à une partie intermédiaire de la seconde équerre correspondante (7) afin que le tronçon inférieur (4) puisse pivoter par rapport au tronçon supérieur (3) autour de l'axe de pivotement (8), entre une première position d'extrémité dans laquelle le tronçon inférieur (4) est aligné sur le tronçon supérieur (3) et, dans la position de fermeture du tronçon supérieur (3), recouvre la partie inférieur de l'ouverture (1d) de porte arrière, et une seconde position d'extrémité dans laquelle le tronçon inférieur (4) est placé perpendiculairement au tronçon supérieur (3), les amortisseurs (10) pouvant maintenir le tronçon inférieur (4) en toute position comprise entre les positions d'extrémité.

**6.** Structure de porte arrière de véhicule selon la revendication 5, dans laquelle les seconds amortisseurs (10) ont une course efficace inférieure à celle des premiers amortisseurs (9) afin que, lorsque le tronçon supérieur (3) est déplacé vers une position d'ouverture alors que le tronçon inférieur (4) est en position d'ouverture, les seconds amortisseurs (10) arrivent en bout de course plus tôt que les premiers amortisseurs (9) et, ainsi, les secondes équerres (7) et le tronçon inférieur (4) qui leur est raccordé sont obligés de pivoter autour de l'axe (8) de pivotement pendant le déplacement ultérieur de tronçon supérieur (3) après que les seconds amortisseurs (10) ont atteint la position limite avec mise en position alignée sur le tronçon supérieur (3), si bien que les tronçons supérieur et inférieur (3 et 4) peuvent être mis simultanément en position de fermeture.

# FIG.1

# FIG.2

# FIG.3

# FIG.5

# FIG.4